# EUROPEAN PATENT SPECIFICATION

(11) **EP 3 153 719 B1**
(45) Date of publication and mention of the grant of the patent: **03.01.2024**
(21) Application number: 16192044.2
(22) Date of filing: 03.10.2016
(51) Int. Cl.: F16B 12/20, A47B 91/02

(54) **COMBINATION OF A DOUBLE JOINING DEVICE WITH THREE PANLES FOR CENTRAL PANELS OF FURNITURE AND FURNISHING ITEMS**
KOMBINATION EINER DOPPEL VERBINDUNGSVORRICHTUNG MIT DREI PANELEN FÜR ZENTRALE PANELEN FÜR MÖBELTEILEN UND MÖBELN MIT SOLCHEN
COMBINATION D'UN DISPOSITIF D'ASSEMBLAGE DOUBLE ET DE TROIS PANNEAUX POUR PANNEAU CENTRALE DE MEUBLE ET MEUBLE CORRESPONDANT

(30) Priority: 09.10.2015 IT UB20154283
(43) Date of publication of application: 12.04.2017
(73) Proprietor: Leonardo S.r.L., 22060 Figino Serenza (CO) (IT)
(72) Inventor: CATTANEO, Carlo, 22060 Figino Serenza (CO) (IT)
(74) Representative: Franco Martegani S.r.l.

(56) References cited:
- WO-A2-2008/076089
- CH-A5- 676 026
- DE-A1- 2 701 871
- FR-A- 1 456 969
- US-B1- 6 547 477

## Description

The present invention relates to a combination of a double joining device with a shoulder and two bases or shelves.

The joining between two panels, for example between a shoulder of a piece of furniture and a base, or in any case a shelf, is currently effected in the furniture and furnishing field using various procedures and with different solutions.

Examples of these solutions are known for example from patents US7494297, US5567081, US6547477, FR1456969A and US4408923.

For example, the document CH 676 026 discloses a furniture item with parts joined to each other by connecting fittings. Each of these comprises an oblong connector, fixed at one end in one of the parts. Its remaining portions are accommodated in the other part, a peripheral groove being formed in its end. A tapped tubular component contains a transverse passage accommodating the grooved part of the connector, and accommodates a clamping screw (30).

These known solutions have a certain complexity and in any case have a certain visibility, as they require closing elements of the seats or holes necessary for positioning the elements that effect the joining.

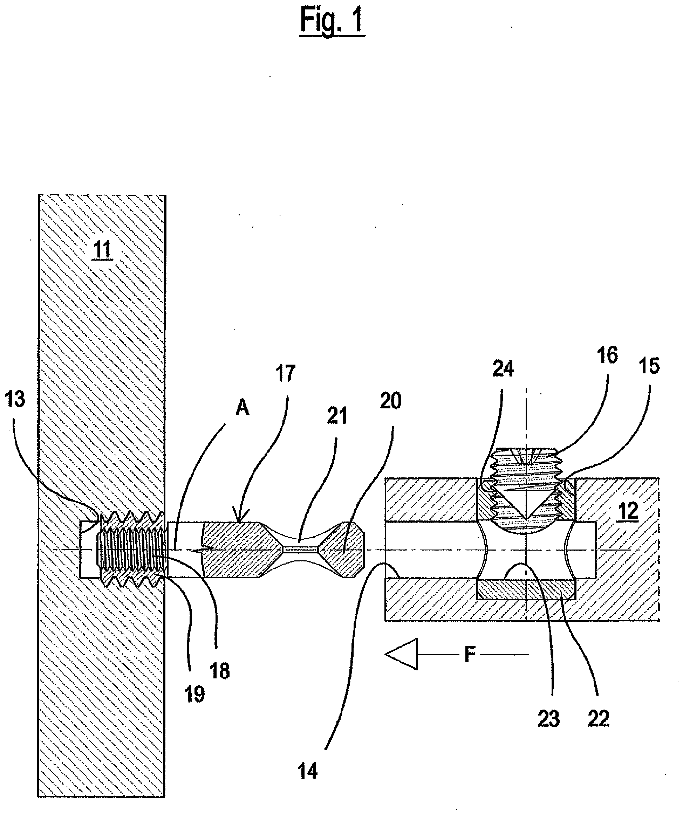

Much more simply, figures 1, 2 and 3 show a known solution of a joining device for parts of furniture and furnishing items, for example between a shoulder of a piece of furniture and a base, or in any case a shelf.

In the known solution illustrated, holes must be provided in both a shoulder 11 and a base 12 of a piece of furniture, both partially shown in a connection part of the same. The shoulder 11, in fact, provides a horizontal blind hole 13 and the base 12 even provides a double hole 14, 15. More specifically, a horizontal hole 14 to be aligned with the hole 13 of the shoulder 11, and a vertical hole 15, formed in the upper surface of the base 12, which intersects the first hole 14, for the insertion of a blocking element, for example a grub screw 16, wherein both holes are blind.

Said hole 13 has an axis A which is perpendicular to the shoulder 11.

This known joining device provides for the positioning of a pin 17 with a first threaded end 18 inside an internally threaded bush 19 positioned in the hole 13 of the shoulder 11. The pin 17 contains, at the other end 20, a housing 21 for an end of the grub screw 16.

A bush 22 is housed in the vertical hole 15 of the base 12, which provides a horizontal pass-through hole 23 for receiving the protruding end 20 of the pin 17 and a vertical threaded pass-through hole 24 which receives the grub screw 16.

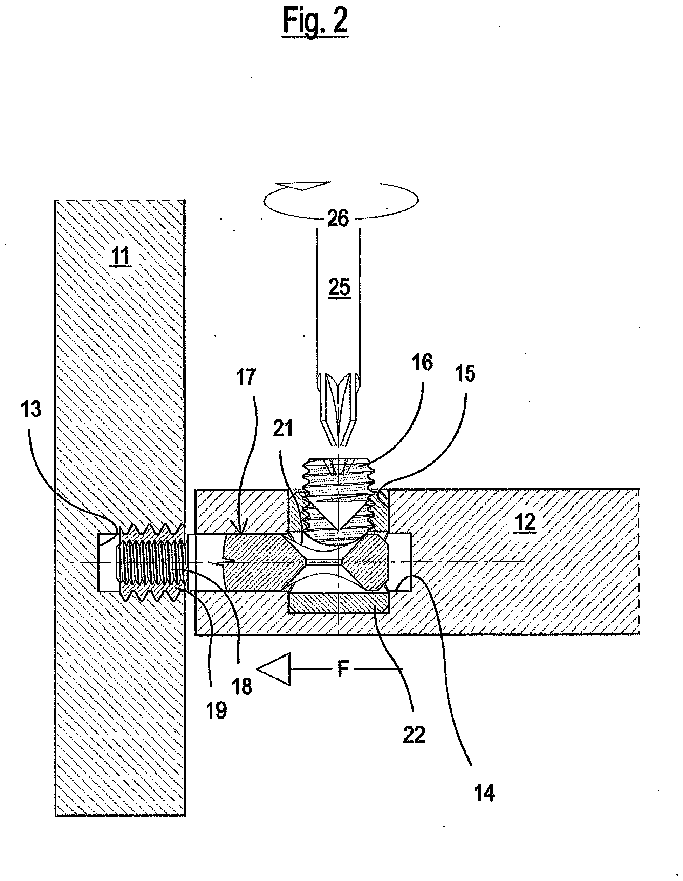

By thus positioning said elements forming the known joining device and juxtaposing the shoulder and the base according to the arrow F of figure 1, the coupling of figure 2 is obtained, with the pin 17 inserted in the hole 14 of the base 12 and in the bush 22.

The grub screw 16 is then screwed, with a tool 25, according to the arrow 26, into the bush 22 so that the tip of the grub screw 16 is positioned in the housing 21 provided at the free end 20 of the pin 17.

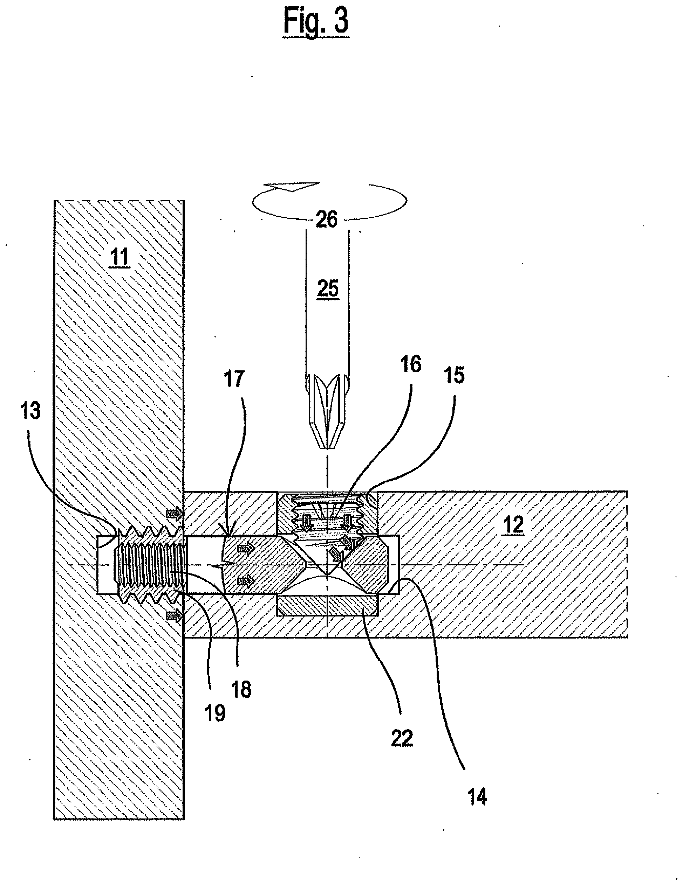

The tightening of the grub screw 16 pushes the base 12 against the shoulder 11 forming the final stable position shown in figure 3.

In this known solution, the blocking group is in the base, it is arranged perpendicular to the base and to the movement or approach direction and tightening between the shoulder and base. Only the pin, with which the blocking group cooperates, is provided in the thickness of the shoulder or side panel.

Said figure 3 indicates, by means of a series of arrows, the scheme of forces at play between the shoulder 11 and base 12 of the piece of furniture and between the parts of the joining device.

This final position also shows how the end of the hole 15 is present on the upper surface of the base 12, and is normally covered with a closing cap (not shown).

Said hole and the corresponding cap form a visible part of the joining device.

In the first place, this part does not have an aesthetically valid appearance as, although there is the presence of the cap, it shows how the joining has been effected. Furthermore, the cap itself, which is difficult to be brought specifically in line with the surface of the base, represents an obstacle for the insertion of any object, creating a protrusion, even if minimum, with respect to the upper surface of the base.

The presence of at least two holes in the base, moreover, intersecting each other, causes a weakening of the base itself that must sustain loads representing a possible cause of breakage.

Furthermore, when a panel is positioned in the centre between two shelves or bases or other panels as required, the holes are formed for each part and therefore the problems previously mentioned are doubled.

The general objective of the present invention is to provide a combination of a joining device between parts of furniture and furnishing items, with a shoulder and a pair of bases positioned at opposite sides of the same, capable of solving the drawbacks mentioned above of the known art, in an extremely simple, economical and particularly functional manner.

A further objective of the present invention is to provide a joining device between parts of furniture and furnishing items, such as a shoulder and a pair of opposing bases, which is not visible to an observer and therefore has a high aesthetical value.

Another objective of the present invention is to provide a joining device between parts of furniture and furnishing items, such as a shoulder and a pair of opposing bases, which does not have any protrusion with respect to the upper surface of each base.

The structural and functional characteristics of the present invention and its advantages with respect to the known art will appear more evident from the following description, referring to the enclosed schematic drawings which show embodiment examples of the same invention. In the drawings:
- figure 1 is a sectional view illustrating parts, spaced from each other, of a known joining device for parts of furniture and furnishing items, for example between a shoulder of a piece of furniture and a base or in any case a shelf;
- figures 2 and 3 are two sectional views of the known device of figure 1, wherein figure 2 shows said parts juxtaposed with respect to each other and partially inserted in each other and figure 3 shows said parts completely inserted in each other and tightened;
- figure 4 is a perspective view illustrating spaced parts of a first embodiment of a joining device for parts of furniture and furnishing items of the invention, which can be positioned, for example, in a shoulder of a piece of furniture interposed between a pair of bases or shelves;
- figure 5 is a perspective view of the central part of the device of figure 4 with partly exploded elements;
- figure 6 is a longitudinal sectional view of the device of figure 4, inserted in a central shoulder and in two bases or shelves, showing these parts juxtaposed, completely inserted in each other and tightened;
- figures 7 and 8 are two transversal sectional views according to the lines VII-VII and VIII-VIII of figure 6 of the device of the invention of figure 4;
- figures 9, 10 and 11 show front views, from above and below of the closed casing used in the joining device of figures 4 and 5;
- figure 12 shows a sectional view according to the lines XII-XII of figure 9;
- figure 13 is a longitudinal sectional view of a second embodiment of a device of the invention, inserted in a central shoulder and in two bases or shelves, showing these parts juxtaposed, completely inserted in each other and tightened;
- figures 14 and 15 are two sectional views according to the lines XIV-XIV and XV-XV of figure 13 of the device of the invention.

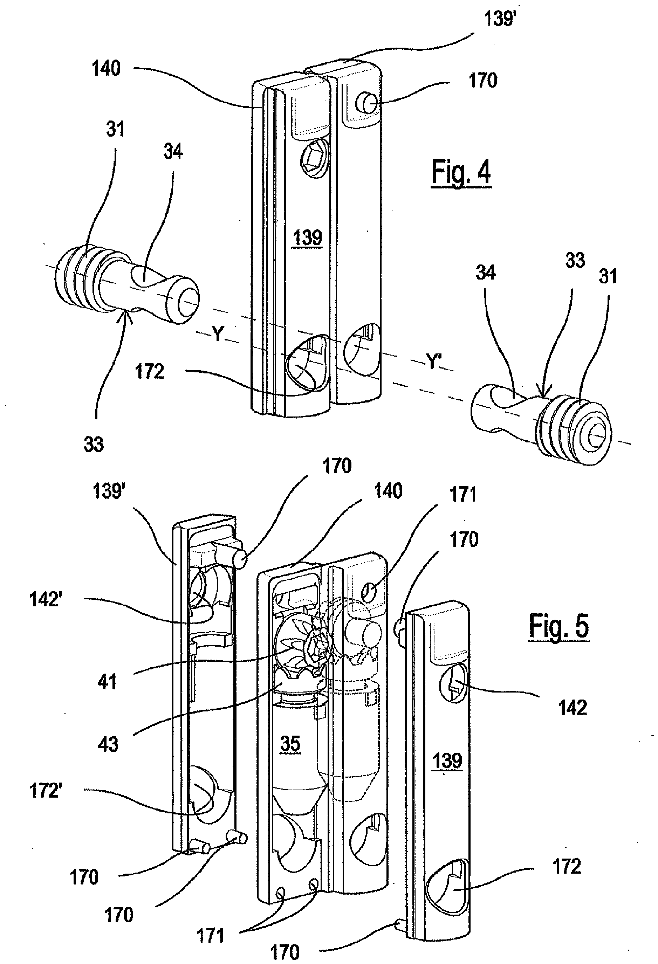

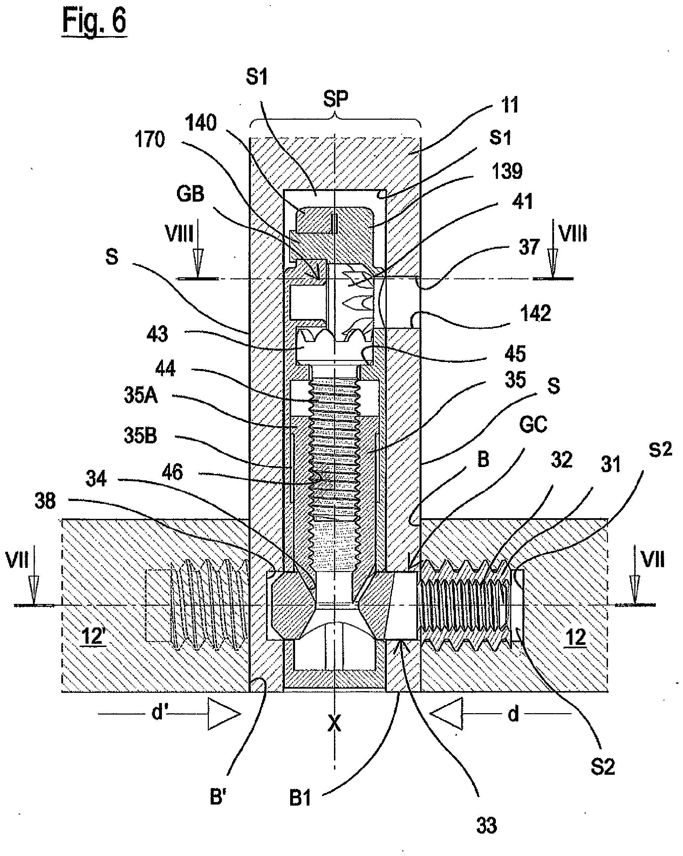

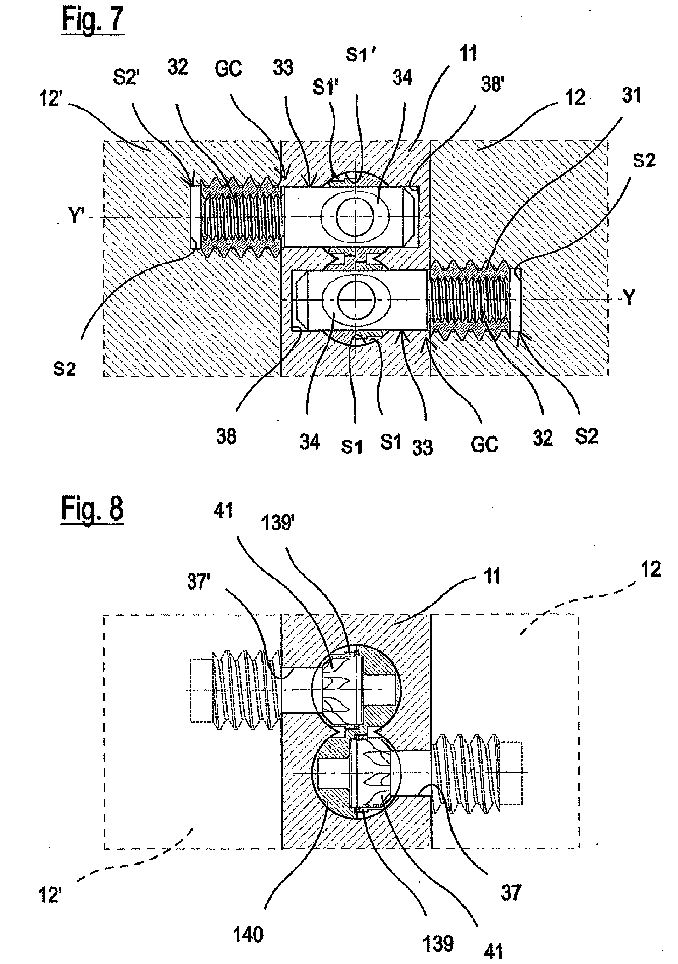

In order to highlight the features of the present invention, figures 4 to 8 will first be examined, which show an embodiment of a combination of double joining device with a shoulder and two bases or shelves according to the invention. In the example, the joining device must connect and join a first panel 11, forming a shoulder of a piece of furniture and a pair of second panels 12, 12', forming each a base or shelf, partially shown in figures 6, 7 and 8. As shown in these illustrative figures, the shoulder 11 and the bases or panels 12, 12' are generally perpendicular to each other but they may also be tilted with respect to each other. Furthermore, the two bases 12 and 12' are positioned on opposite sides with respect to the central shoulder 11 and must be firmly connected to the same.

Each of the bases 12, 12' contains, at one of its ends, a seat S2, S2' in the form of a horizontal blind hole in which an internally threaded bush 31 is positioned, blocked, for receiving a threaded end 32 of a pin 33.

The pin 33 provides, in its protruding part, a housing 34 for the tip of a blocking grub screw 35.

Said pin 33 defines a connection group GC to be firmly blocked for stably interconnecting said shoulder 11 and each of said bases 12, 12' as better explained hereunder.

It should also be pointed out that the seats S2, S2' in the form of blind holes are formed in the two bases 12, 12' according to directions Y, Y' parallel to each other, adjacent but not aligned.

The shoulder 11 provides two seats S1, S1' - each for a blocking group GB - having a substantially elongated configuration, in the form of a double vertical blind hole which, for example, forms a double "eight-shaped" circular section. Each vertical hole or seat S1, S1' intersects a first and a second horizontal blind hole 37, 38, and 37', 38', respectively, spaced from each other as shown in figure 6.

Both of the seats S1, S1' characteristically extend from a perimetric edge B1 towards the interior of said shoulder or panel 11.

A pair of half-shells are housed in the pair of vertical holes or seats S1, S1', which, when assembled, form a double cylindrical casing, with an eight-shaped transversal section. In particular, in the example shown, a first half-shell 140 with an S-shaped section is provided, on which a second C-shaped half-shell 139, 139' limited to half of the section of the first half-shell 140, is positioned for closing each part of the S-shaped section.

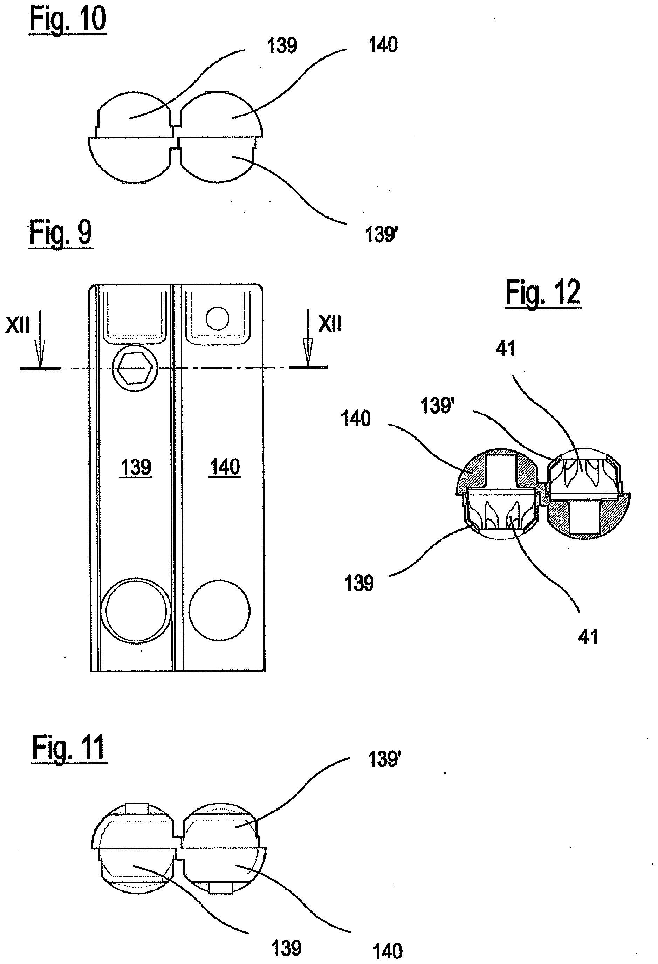

The forms of the half-shells are clearly visible in figures 10 to 12, as are also some of the elements of the device shown in a sectional view.

These half-shells 139 and 139' have, in their upper part, holes 142, 142' which must be aligned with the first horizontal holes 37, 37' and, in their lower part, holes 172, 172' which must be aligned with the second horizontal holes 38, 38' of the shoulder 11.

The coupling between the parts of the casing 140, 139 and 139' is facilitated by the presence of pins 170 protruding from a half-shell 139, 139' or 140 suitable for being snap-inserted into seats 171 specifically formed in the other half-shell 140, 139 or 139'.

In the example, each half of the half-shell 140, with an S-shaped section houses a grub screw 35 which is caused to slide by means of a pinion-toothed crown bevel. A pinion 41 is in fact rotatingly positioned inside a hole formed in a half of the half-shell 139, 139' which is aligned with the respective first horizontal hole 37, 37' of the shoulder 11. The pinion 41 is engaged with a toothed crown 43, formed as head of a threaded screw 44, and can rotate in a seat 45 formed in the two half-shells 139 and 139' when coupled with the first half-shell 140. The threaded screw 44 is in turn positioned in a threaded axial hole 46 and inside the grub screw 35.

Said components 34, 41, 43, 44, 45, 46, define, in each half of the casing 140, 139 and 139', a respective blocking group GB, of two adjacent blocking groups. Each blocking group GB is suitable for acting on the respective connection group GC, which is also of two parallel connection groups GC, positioned on respective opposite panels or bases 12, 12', consisting of the pin 33, as explained hereunder.

A shaped tool (not shown) such as a hexagonal spanner, is suitable for being inserted in an inner complementary seat inside the pinion 41 of a first blocking group GB passing, from one side, through the first hole 37. For the second blocking group GB, the tool is inserted from the other opposite side, passing through the first hole 37' of the shoulder 11, so as to be coupled with the respective pinion 41 causing its rotation.

In each blocking group GB, the rotation of the pinion 41 in turn causes the rotation of the toothed crown 43 of the head of the threaded screw 44. The rotation of threaded screw 44 forces the downward movement of the respective grub screw 35.

It can thus be seen how, in this embodiment, the combination of the present invention essentially comprises a pair of adjacent blocking groups GB (34,41,43,44,45,46), inserted inside the adjacent seats S1, S1' of the shoulder 11, each of which acts on a respective pin 33 connection group GC to be blocked, positioned inside a seat S2, S2' of each of the two bases 12 and 12'.

More generically, regardless of what is disclosed in this example, the invention provides that a pair of adjacent blocking groups GB be inserted inside two seats S1, S1', also adjacent, fully contained in the thickness SP of the shoulder or panel 11, as preferred. The longitudinal axis x of each seat S1, S1' or hole extends perpendicularly to the approach direction d or d' and tightening of the respective base 12 or 12' to the shoulder or central panel 11.

With respect to the example, the two parts of the joining device are first positioned by placing the two half-shells 139, 139' and 140 in the hole or seat S1, S1' of the shoulder 11 and the pin 33 in the hole or seat S2 of the base 12, 12', as shown in figure 6. To do this, the edge B, B' of the base 12 is moved towards the facing surface S, S' of the shoulder 11 by inserting the protruding part of the pin 33 into the second horizontal hole 38 of the shoulder 11.

A hexagonal spanner, for example, is then inserted in the complementary seat of the pinion 41, passing through the first hole 37 or 37' of the shoulder 11 so as to cause the rotation of the respective pinion 41. The rotation of the pinion 41 causes the rotation of the toothed crown 43 of the head of the threaded screw 44 which forces the downward movement of the respective grub screw 35; for this purpose, the grub screw 35 is provided with anti-rotation blocking means 35A, 35B (anti-rotational form) which allow the translation of the same grub screw 35, preventing its rotation. The means 35A can consist, for example, of radial protrusions which are coupled inside corresponding seats 35B of the half-shells 39, 40.

The tip of the grub screw 35 is engaged in the housing 34 of the pin 33 causing the tightening between the shoulder 11 and the base 12, 12' as shown in figure 6.

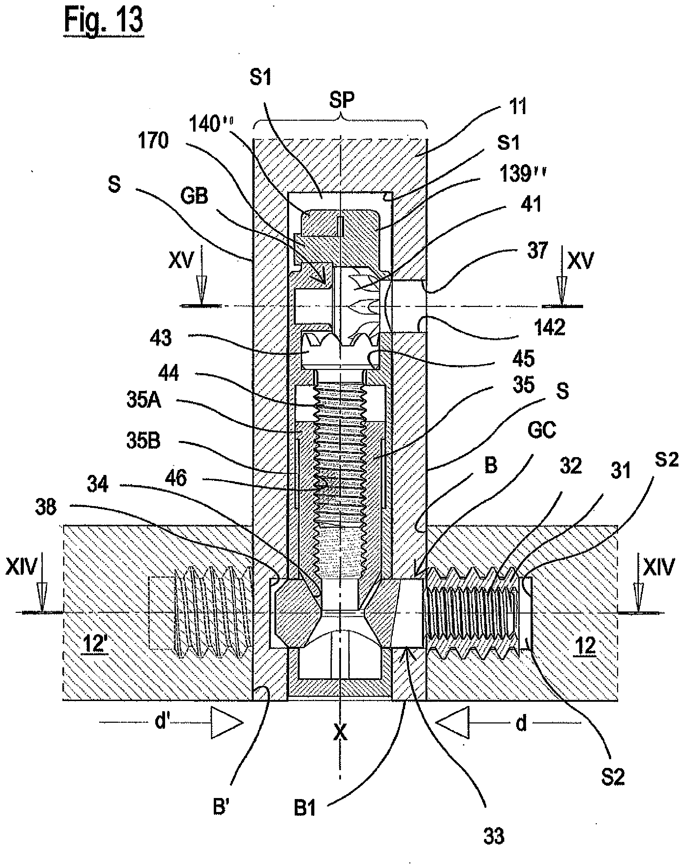

Figures 13, 14 and 15 show sectional views of a second embodiment of a device of the invention when inserted in a central shoulder and in two bases or shelves. In this example, the same elements are indicated with the same reference number described above.

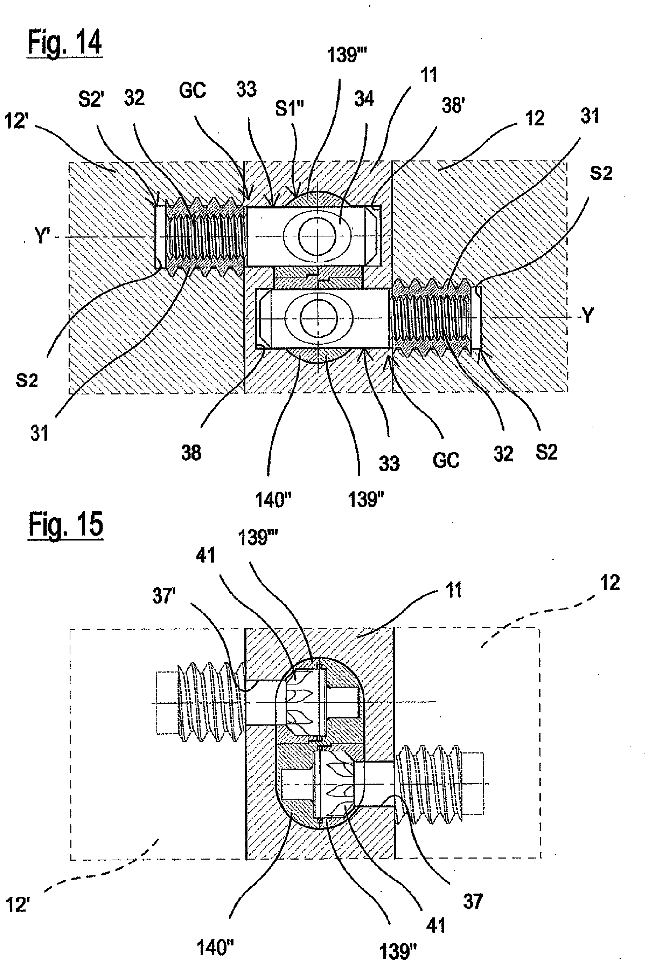

The two previous vertical holes or seats S1, S1', where the pair of half-shells are housed, are elements having the same function but different forms. In this second embodiment, a single seat S" or hole is provided, which also houses a double casing, with a rectangular transversal section having rounded short ends. The example illustrated in figures 14 and 15 clearly shows the provision of a first half-shell 140" having an S-shaped section on which a second C-shaped half-shell 139",139"', limited to half of the section of the first half-shell 140", is positioned for closing each part of the S-shaped section.

In this way, the casing is simplified, as also the hole or seat S", with an increased compactness.

Regardless of what is shown, according to the invention, a pair of adjacent blocking groups GB is provided in general, inserted in respective seats S1, S1' also positioned adjacent in the thickness SP of the shoulder or panel 11.

Furthermore, each blocking group GB acts on a respective connection group GC to be blocked, positioned inside a seat S2, S2' of the respective base 12, 12' which is arranged on opposite sides with respect to the shoulder 11.

A particularly robust joining device is thus obtained, positioned well hidden in the shoulder and in the two opposite bases, which first of all advantageously solves the problem relating to the visibility of the device. This creates an aesthetically pleasing appearance of the piece of furniture in which it is used.

Furthermore, any possible caps positioned in the few holes present do not interfere with what is resting on each of the two bases of the furniture which is free of any type of hole.

In this way, there are no obstacles on the bases for the insertion of any object, eliminating any type of protrusion, even if minimum, with respect to the upper surface of the base.

Holes produced on the shoulder are not particularly visible to an observer with respect to holes on the base as in the known art, thus obtaining a high aesthetical value.

Finally, the elimination of holes that intersect each other in each base eliminates any possible weakening of the base itself that can therefore sustain high loads without the danger of a possible cause of breakage of the base.

The half-shells are particularly simple to produce as they can be obtained by moulding in only three pieces even if they contain two blocking groups and are suitable for cooperating with as many connection groups.

The forms of the structure for the production of a combination of the present invention, as also the materials and assembly modes, can naturally differ from those shown for purely illustrative and non-limiting purposes in the drawings.

The objectives mentioned in the preamble of the description have therefore been achieved.

The protection scope of the present invention is defined by the enclosed claims.

## Claims

1. A combination of a double joining device, suitable for central panels of furniture and furnishing items, with at least three panels (11,12,12') said panels (11,12,12') having seats (S1, S1', S2,S2'), said panels comprising a first panel (11), forming a shoulder of a piece of furniture, and a pair of second panels (12,12'), forming each a base or shelf of a piece of furniture, positioned on opposite sides of the first panel (11), which must be moved towards each other according to an approach direction (d,d') in order to bring the edge (B,B') of one panel abutted in a tightening position against a surface (S,S') of the other panel, wherein said joining device comprises at least two blocking groups (GB) and one connection group (GC) assembled on said panels (11,12), said double joining device comprises two blocking groups (GB) inserted inside respective seats (S1,S1'), adjacent and contained in the thickness (SP) of the first panel (11) on which said blocking groups (GB) are applied, said seats (S1,S1') having a longitudinal axis (X) which is perpendicular to said direction (d,d'), and wherein each of said second panels (12,12') receives a connection group (GC) which collaborates with a respective blocking group (GB), seats (S2,S2') of said second panels (12,12') being positioned parallel to each other so as to collaborate with said blocking groups (GB) arranged adjacent in said first panel (11)
wherein each of the two blocking groups (GB) can be actuated from a first hole (37,37') produced in said shoulder (11) and that each of said connection groups (GC) can be coupled with said shoulder (11) from a second hole (38,38') produced in said shoulder (11), said two holes (37,38; 37',38') being spaced from each other and horizontal,
wherein each blocking group (GB) comprises a pinion-toothed crown bevel (41,43), which is housed in a casing (139,139',140) positioned in a pair of adjacent holes or seats (S1,S1') of said shoulder (11) and which controls the movement of a grub screw (35) suitable for being engaged on a respective pin (33) of each of the two connection groups (GC).

2. The device according to claim 1, **characterized in that** each of the two blocking groups (GB) is inserted inside a respective seat (S1,S1') which is contained in the thickness (SP) of the first panel (11), said seat (S1,S1') extending from an edge (B1) towards the interior of said first panel (11) and such as to contain a casing (139, 139',140) for said two blocking groups (GB).

3. The joining device according to claim 1, **characterized in that** each blocking group (GB) is positioned in a seat (S1,S1') of said shoulder (11) and acts on a respective connection group (GC) to be blocked, situated in each of said two second panels or bases (12,12') and which seat (S2) is formed laterally with respect to each base (12,12').

4. The joining device according to claim 3, **characterized in that** said hole or seat (S1,S1') in said shoulder (11) is vertical.

5. The device according to claim 3 or 4, **characterized in that** said hole or seat (S2) in said base (12,12') is horizontal.

6. The joining device according claim 1, **characterized in that** a toothed crown (43) of said bevel extends into a threaded screw (44), which in turn is positioned in a threaded hole (46) axial to and inside said grub screw (35).

7. The joining device according to claim 1 or 6, **characterized in that** said pin group comprises a pin (33) that is positioned, in a threaded end (32), in an internally threaded bush (31), arranged in said hole or seat (S2) of said base (12), said pin (33) providing, in its protruding part, a housing (34) for said grub screw (35).

8. The joining device according to one or more of the previous claims, **characterized in that** it provides, for said two blocking groups (GB), a casing (139,139', 140) positioned in a pair of adjacent holes or seats (S1,S1') situated in said first panel or shoulder (11), said casing comprising at least a pair of half-shells that form, when assembled, a double cylindrical casing with an "eight-shaped" transversal section.

9. The joining device according to claim 8, **characterized in that** said casing provides a first half-shell (140) with an S-shaped section, on which a second C-shaped half-shell (139,139') limited to half of the section of the first half-shell (140), is positioned for closing each part of the S-shaped section.

10. The joining device according to one or more of the previous claims from 1 to 7, **characterized in that** it provides, for said two blocking groups (GB), a casing (139",139‴,140") arranged in a hole with a rectangular transversal section having short rounded ends positioned in said first panel or shoulder (11), said casing comprising at least a pair of half-shells which, when assembled, form a double casing.

11. The joining device according to claim 10, **characterized in that** said casing provides a first half-shell (140") with an S-shaped section, on which a second C-shaped half-shell (139",139"') limited to half of the section of the first half-shell (140"), is positioned for closing each part of the S-shaped section.

## Patentansprüche

1. Kombination einer Doppel-Fügevorrichtung, die für zentrale Platten von Möbeln und Einrichtungsgegenständen mit mindestens drei Platten (11, 12, 12') geeignet ist, wobei die Platten (11, 12, 12') Sitze (S1, S1', S2, S2') aufweisen, wobei die Platten eine erste Platte (11), die eine Schulter eines Möbelstücks bildet, und ein Paar von zweiten Platten (12, 12') umfassen, die jeweils eine Basis oder ein Regal eines Möbelstücks bilden, die auf gegenüberliegenden Seiten der ersten Platte (11) positioniert sind, und die gemäß einer Annäherungsrichtung (d, d') aufeinander zu bewegt werden müssen, um einen Rand (B, B') einer Platte in einer Spannposition gegen eine Oberfläche (S, S') der anderen Platte in Anlage zu bringen,
wobei die Fügevorrichtung mindestens zwei Blockiergruppen (GB) und eine Verbindungsgruppe (GC) umfasst, die auf den Platten (11, 12) montiert sind, wobei die Doppel-Fügevorrichtung zwei Blockiergruppen (GB) umfasst, die in entsprechende Sitze (S1, S1') eingesetzt sind, die an die Dicke (SP) der ersten Platte (11), auf der die Blockiergruppen (GB) angebracht sind, angrenzen und in dieser enthalten sind, wobei die Sitze (S1, S1') eine Längsachse (X) aufweisen, die senkrecht zu der Richtung (d, d') ist, und wobei jede der zweiten Platten (12, 12') eine Verbindungsgruppe (GC) aufnimmt, die mit einer entsprechenden Blockiergruppe (GB) zusammenwirkt, wobei Sitze (S2, S2') der zweiten Platten (12, 12') parallel zueinander angeordnet sind, um mit den Blockiergruppen (GB) zusammenzuwirken, die in der ersten Platte (11) benachbart angeordnet sind;
wobei jede der beiden Blockiergruppen (GB) von einem ersten Loch (37, 37') aus betätigt werden kann, das in der Schulter (11) ausgebildet ist, und dass jede der Verbindungsgruppen (GC) mit der Schulter (11) von einem zweiten Loch (38, 38') aus gekoppelt werden kann, das in der Schulter (11) ausgebildet ist, wobei die beiden Löcher (37, 38; 37', 38') voneinander beabstandet und horizontal sind,
wobei jede Blockiergruppe (GB) einen ritzelverzahnten Kegelkranz (41, 43) umfasst, der in einem Gehäuse (139, 139', 140) untergebracht ist, das in einem Paar benachbarter Löcher oder Sitze (S1, S1') der Schulter (11) positioniert ist, und der die Bewegung eines Gewindestiftes (35) steuert, der geeignet ist, mit einem entsprechenden Stift (33) jeder der beiden Verbindungsgruppen (GC) in Eingriff zu treten.

2. Vorrichtung nach Anspruch 1, **dadurch gekennzeichnet, dass** jede der beiden Blockiergruppen (GB) in einen entsprechenden Sitz (S1, S1') eingesetzt ist, der in der Dicke (SP) der ersten Platte (11) enthalten ist, wobei sich der Sitz (S1, S1') von einem Rand (B1) zum Inneren der ersten Platte (11) hin erstreckt und so beschaffen ist, dass er ein Gehäuse (139, 139', 140) für die beiden Blockiergruppen (GB) enthält.

3. Fügevorrichtung nach Anspruch 1, **dadurch gekennzeichnet, dass** jede Blockiergruppe (GB) in einem Sitz (S1, S1') der Schulter (11) positioniert ist und auf eine jeweilige zu blockierende Verbindungsgruppe (GC) einwirkt, die sich in jeder der beiden zweiten Platten oder Basen (12, 12') befindet und wobei der Sitz (S2) lateral in Bezug auf jede Basis (12, 12') ausgebildet ist.

4. Fügevorrichtung nach Anspruch 3, **dadurch gekennzeichnet, dass** das Loch oder der Sitz (S1, S1') in der Schulter (11) vertikal ist.

5. Vorrichtung nach einem der Ansprüche 3 oder 4, **dadurch gekennzeichnet, dass** das Loch oder der Sitz (S2) in der Basis (12, 12') horizontal ist.

6. Fügevorrichtung nach Anspruch 1, **dadurch gekennzeichnet, dass** sich ein Zahnkranz (43) der Abschrägung in eine Gewindeschraube (44) erstreckt, die ihrerseits in einem Gewindeloch (46) axial zu und innerhalb des Gewindestifts (35) angeordnet ist.

7. Fügevorrichtung nach einem der Ansprüche 1 oder 6, **dadurch gekennzeichnet, dass** die Stiftgruppe einen Stift (33) umfasst, der mit einem Gewindeende (32) in einer Innengewindebuchse (31) positioniert ist, die sich in dem Loch oder Sitz (S2) der Basis (12) befindet, wobei der Stift (33) in seinem vorstehenden Teil ein Gehäuse (34) für den Gewindestift (35) vorsieht.

8. Fügevorrichtung nach einem der vorhergehenden Ansprüche, **dadurch gekennzeichnet, dass** sie für die beiden Blockiergruppen (GB) ein Gehäuse (139, 139', 140) vorsieht, das in einem Paar benachbarter Löcher oder Sitze (S1, S1') positioniert ist, die sich in der ersten Platte oder Schulter (11) befinden, wobei das Gehäuse mindestens ein Paar von Halbschalen umfasst, die, wenn sie zusammengesetzt sind, ein doppelzylindrisches Gehäuse mit einem "acht-förmigen" Querschnitt bilden.

9. Fügevorrichtung nach Anspruch 8, **dadurch gekennzeichnet, dass** das Gehäuse eine erste Halbschale (140) mit einem S-förmigen Querschnitt aufweist, auf der eine zweite C-förmige Halbschale (139, 139'), die auf die Hälfte des Querschnitts der ersten Halbschale (140) begrenzt ist, zum Schließen jedes Teils des S-förmigen Querschnitts angeordnet ist.

10. Fügevorrichtung nach einem der Ansprüche 1 bis 7, **dadurch gekennzeichnet, dass** sie für die beiden Blockiergruppen (GB) ein Gehäuse (139", 139‴, 140") vorsieht, das in einem Loch mit rechteckigem Querschnitt angeordnet ist, das kurze abgerundete Enden aufweist, die in der ersten Platte oder Schulter (11) positioniert sind, wobei das Gehäuse mindestens ein Paar von Halbschalen umfasst, die, wenn sie zusammengefügt sind, ein Doppelgehäuse bilden.

11. Fügevorrichtung nach Anspruch 10, **dadurch gekennzeichnet, dass** das Gehäuse eine erste Halbschale (140") mit einem S-förmigen Querschnitt aufweist, auf der eine zweite C-förmige Halbschale (139", 139‴), die auf die Hälfte des Querschnitts der ersten Halbschale (140") begrenzt ist, zum Schließen jedes Teils des S-förmigen Querschnitts angeordnet ist.

## Revendications

1. Combinaison d'un dispositif de double j onction adapté à des panneaux centraux de meubles et d'articles d'ameublement, avec au moins trois panneaux (11, 12, 12'), lesdits panneaux (11, 12, 12') comportant des sièges (S1, S1', S2, S2'), lesdits panneaux comprenant un premier panneau (11), formant un épaulement d'une pièce de mobilier, et une paire de seconds panneaux (12, 12'), formant chacun un fond ou une étagère d'une pièce de mobilier, positionnés de part et d'autre du premier panneau (11), qui doivent être déplacés l'un vers l'autre selon une direction d'approche (d, d') afin d'amener le bord (B, B') d'un panneau en butée dans une position de serrage contre une surface (S, S') de l'autre panneau,
dans lequel ledit dispositif de jonction comprend au moins deux groupes de blocage (GB) et un groupe de connexion (GC) assemblés sur lesdits panneaux (11, 12), ledit dispositif de double jonction comprend deux groupes de blocage (GB) insérés à l'intérieur de sièges respectifs (S1, S1'), adjacents et contenus dans l'épaisseur (SP) du premier panneau (11) sur lequel lesdits groupes de blocage (GB) sont appliqués, lesdits sièges (S1, S1') comportant un axe longitudinal (X) qui est perpendiculaire à ladite direction (d, d'), et dans lequel chacun desdits seconds panneaux (12, 12') reçoit un groupe de connexion (GC) qui coopère avec un groupe de blocage respectif (GB), les sièges (S2, S2') desdits seconds panneaux (12, 12') étant positionnés parallèlement les uns aux autres de manière à coopérer avec lesdits groupes de blocage (GB) disposés de manière adjacente dans ledit premier panneau (11),
dans lequel chacun des deux groupes de blocage (GB) peut être actionné à partir d'un premier trou (37, 37') réalisé dans ledit épaulement (11) et en ce que chacun desdits groupes de connexion (GC) peut être couplé audit épaulement (11) à partir d'un second trou (38, 38') réalisé dans ledit épaulement (11), lesdits deux trous (37, 38 ; 37', 38') étant espacés l'un de l'autre et horizontaux,
dans lequel chaque groupe de blocage (GB) comprend un biseau de couronne à dents de pignon (41, 43), qui est logé dans un boîtier (139, 139', 140) positionné dans une paire de trous ou sièges adjacents (S1, S1') dudit épaulement (11) et qui commande le mouvement d'une vis sans tête (35) apte à être engagée sur un pion respectif (33) de chacun des deux groupes de connexion (GC).

2. Dispositif selon la revendication 1, **caractérisé en ce que** chacun des deux groupes de blocage (GB) est inséré à l'intérieur d'un siège respectif (S1, S1') qui est contenu dans l'épaisseur (SP) du premier panneau (11), ledit siège (S1, S1') s'étendant depuis un bord (B1) vers l'intérieur dudit premier panneau (11) et de manière à contenir un boîtier (139, 139', 140) pour lesdits deux groupes de blocage (GB).

3. Dispositif de jonction selon la revendication 1, **caractérisé en ce que** chaque groupe de blocage (GB) est positionné dans un siège (S1, S1') dudit épaulement (11) et agit sur un groupe de connexion respectif (GC) devant être bloqué, situé dans chacun desdits deux seconds panneaux ou fonds (12, 12') et lequel siège (S2) est formé latéralement par rapport à chaque fond (12, 12').

4. Dispositif de j onction selon la revendication 3, **caractérisé en ce que** ledit trou ou siège (S1, S1') dans ledit épaulement (11) est vertical.

5. Dispositif selon la revendication 3 ou 4, **caractérisé en ce que** ledit trou ou siège (S2) dans ledit fond (12, 12') est horizontal.

6. Dispositif de jonction selon la revendication 1, **caractérisé en ce qu'**une couronne dentée (43) dudit biseau s'étend dans une vis filetée (44), qui à son tour est positionnée dans un trou fileté (46) axial par rapport à ladite vis sans tête (35) et à l'intérieur de celle-ci.

7. Dispositif de jonction selon la revendication 1 ou 6, **caractérisé en ce que** ledit groupe de pions comprend un pion (33) qui est positionné, dans une extrémité filetée (32), dans une douille filetée intérieurement (31), disposée dans ledit trou ou siège (S2) dudit fond (12), ledit pion (33) fournissant, dans sa partie saillante, un logement (34) pour ladite vis sans tête (35).

8. Dispositif de jonction selon une ou plusieurs des revendications précédentes, **caractérisé en ce qu'**il fournit, pour lesdits deux groupes de blocage (GB), un boîtier (139, 139', 140) positionné dans une paire de trous ou sièges adjacents (S1, S1') situés dans ledit premier panneau ou épaulement (11), ledit boîtier comprenant au moins une paire de demi-coquilles qui forment, une fois assemblées, un boîtier cylindrique double à section transversale en « forme de huit ».

9. Dispositif de jonction selon la revendication 8, **caractérisé en ce que** ledit boîtier présente une première demi-coquille (140) à section en forme de S, sur laquelle une seconde demi-coquille en forme de C (139, 139') limitée à la moitié de la section de la première demi-coquille (140), est positionnée pour fermer chaque partie de la section en forme de S.

10. Dispositif de jonction selon une ou plusieurs des revendications précédentes 1 à 7, **caractérisé en ce qu'**il présente, pour lesdits deux groupes de blocage (GB), un boîtier (139", 139‴, 140") disposé dans un trou avec une section transversale rectangulaire comportant des extrémités courtes arrondies positionnées dans ledit premier panneau ou épaulement (11), ledit boîtier comprenant au moins une paire de demi-coquilles qui, une fois assemblées, forment un double boîtier.

11. Dispositif de jonction selon la revendication 10, **caractérisé en ce que** ledit boîtier présente une première demi-coquille (140") à section en forme de S, sur laquelle une seconde demi-coquille en forme de C (139", 139"') limitée à la moitié de la section de la première demi-coquille (140"), est positionnée pour fermer chaque partie de la section en forme de S.
